(19)

Europäisches
Patentamt
European
Patent Office
Office européen
des brevets

(11) **EP 1 388 598 B1**

(12) **EUROPEAN PATENT SPECIFICATION**

(45) Date of publication and mention
of the grant of the patent:
**10.03.2010 Bulletin 2010/10**

(51) Int Cl.:
***D03D 1/00*** (2006.01)

(21) Application number: **02769429.8**

(86) International application number:
**PCT/JP2002/004714**

(22) Date of filing: **15.05.2002**

(87) International publication number:
**WO 2002/092894 (21.11.2002 Gazette 2002/47)**

(54) **WOVEN FABRIC FOR TOOTHED BELT**

GEWEBE FÜR ZAHNRIEMEN

TISSU POUR COURROIE CRANTEE

(84) Designated Contracting States:
**AT BE CH CY DE DK ES FI FR GB GR IE IT LI LU
MC NL PT SE TR**

(30) Priority: **16.05.2001 JP 2001146870**

(43) Date of publication of application:
**11.02.2004 Bulletin 2004/07**

(73) Proprietor: **Asahi Kasei Kabushiki Kaisha
Osaka-shi,
Osaka 530-8205 (JP)**

(72) Inventors:
• **OKUNO, Tokio
Nonoichimachi, Ishikawa-gun, Ishikawa
921-8812 (JP)**

• **YAMAMOTO, Haruhiko
Fukuokamachi, Nishitonami-gun, Toyama
939-0135 (JP)**

(74) Representative: **Weber, Thomas
Patentanwälte
von Kreisler Selting Werner
Deichmannhaus am Dom
Bahnhofsvorplatz 1
50667 Köln (DE)**

(56) References cited:
**EP-A- 0 099 205      JP-A- 4 146 235
JP-A- 5 118 386      JP-A- 59 222 639**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 388 598 B1

**Description**

TECHNICAL FIELD

The present invention relates to a woven fabric used for a toothed surface of a toothed belt, a method for producing such a woven fabric, a toothed belt formed by adhering the woven fabric on the toothed surface, and a stretchable.aligned and twisted yarn used for the woven fabric.

BACKGROUND ART

Toothed belts have been used in various fields including industrial machines and household appliances and, particularly, they have been widely used as driving parts for transmitting a driving force of an automobile engine to a wheel shaft as a torque. However, as more noise is generated when the automobile runs at a high speed, it has strongly been required to eliminate the noise generated by the toothed belt to avoid disturbing the driver or worsening the environment. Also, for the purpose of improving the reliability of an engine, an improved durability of the toothed belt has been desired. Further, the space saving has also been desired for reducing the size of an engine compartment or enhancing a degree of freedom in design. To satisfy such requirements, a woven fabric forming a surface of the toothed belt is required to have not only a sufficient strength but also a sufficient elongation characteristic in the lengthwise direction (particularly during a molding process with rubber.) as well as surface uniformity after being stretched.

A stretch woven fabric, for use in a surface portion of the toothed belt has been disclosed, for example, in Japanese Unexamined Patent Publication (Kokai) No. 8-312724, which uses plied yarns consisting of a plurality of wooly yarns finally twisted in the direction reverse to that of a primary twist for the purpose of facilitating the elongation characteristic. However, as this woven fabric is formed of the plied yarns, the resultant product twist has conspicuous twist unevenness and is rough in the twill line, which deteriorates the surface smoothness of the toothed portion of the belt. Thus, this woven fabric is unsuitable for eliminating noises and saving space (that is, it is not a thin and compact design).

Japanese Examined Utility Model Publication (Kokoku) No. 63-15628 discloses a woven fabric composed of a covering yarn formed of an elastic core yarn around which is wrapped a non-elastic yarn of aromatic polyamide excellent in resistance to heat and resistance to abrasion. However, as the covering yarn is inherently liable to generate slippage between the elastic yarn and the non-elastic yarn, there is an irregularity on a surface of the woven fabric using the covering yarn due to the covering unevenness or the disorder of single fibers forming the non-elastic yarn (lowering of the convergence), whereby it is difficult to obtain a woven fabric having a smooth surface and neatly arranged twill lines. Particularly, as high-strength fiber, such as aromatic polyamide fiber used as non-elastic fiber, is high in rigidity and has no crimp, it is difficult to have a sufficient stretchability as a woven fabric for the toothed belt, and if the fiber fineness of the elastic fiber is increased so that a sufficient stretchability is obtained, the non-elastic fiber may cause horny projections on the surface of the woven fabric, which puts into disorder the neat arrangement of the twill lines and lowers the surface smoothness of the resultant woven fabric necessary for the noise elimination. Furthermore, while it is necessary to use a thick elastic core yarn of 100 dtex or more for obtaining a relatively stable covering yarn, the adhesivity of the woven fabric with rubber becomes inferior as the elastic fiber is molten by heat during the vulcanization to generate a large amount of an impurity, which causes a bottleneck for enhancing the durability of the toothed belt.

Alternatively, Japanese Unexamined Patent Publication (Kokai) No. 59-9239 discloses a woven fabric formed of aligned and twisted yarns obtained by twisting an elastic fiber and non-elastic fibers together. However, as the non-elastic fibers are used as they are (without being crimped), filaments forming the non-elastic fibers emerge from the fabric surface as horny projections during a scouring and relaxing process for developing the stretchability in the woven fabric, whereby a woven fabric having neat twill lines is not obtained, the variance of the elongation thereof increases and the surface smoothness of the teeth portion of the toothed belt becomes worse. If the number of twists in the aligned and twisted yarn is increased, the emergence of the horny projections on the fabric surface may be suppressed to a certain extent. In this case, however, the yarn structure becomes excessively tight, due to the twist, to result in a woven fabric insufficient for stretchability. In the toothed belt obtained therefrom, the woven fabric does not neatly follow the teeth of the toothed belt. Also, a ratio of the elastic fibers contained in a warp group and a weft group is relatively large. In a combination described in one example thereof, in which elastic fibers having as large fiber fineness as exceeding 100 dtex is used, a spiral structure of non-elastic fibers becomes larger due to the elastic fibers during the aligning and twisting process. As the elastic fibers are melted during the vulcanizing process and the spiral structure of the non-elastic fibers solely remains on the surface of the tooth portion, the surface smoothness of the tooth portion of the toothed belt becomes inferior and the twill lines of the woven fabric becomes irregular. As the ratio of the elastic fibers becomes larger, there may be a problem in that the elastic fibers melted by heat during the vulcanizing process cause an impurity to deteriorate the adhesivity of the woven fabric with rubber.

## DISCLOSURE OF THE INVENTION

An object of the present invention is to solve the above-mentioned drawbacks of the prior art, produce a woven fabric for a toothed belt capable of realizing noise reduction, high durability and a space-saving ability and a toothed belt adhered with the woven fabric on a surface of a tooth portion of the toothed belt having a tensile member.

To achieve the above object, the inventors of the present invention have carefully studied the mechanism of generating noise from the toothed belt. Also, the study has been made on toothed belts from which a large or small amount of noise is generated and those good or bad in durability. As a result, it has been found that the noises contain an impact sound occurring when the belt is intermeshed with a pulley, and a frictional sound and an air stream sound generating at that time. Also, it has been found that such impact sounds, frictional sounds and air stream sounds could be mitigated by the line contact effect obtained by neat twill lines in the woven fabric and the smooth pulley surface in contact with the fabric as well as by eliminating residual air between the belt and the pulley, which also improves the durability.

The inventors of the present invention have paid attention to a composite yarn of a twisted type excellent in stretchability as well as to crimps to be imparted to non-elastic fibers used therefor to a certain extent. That is, various stretchable aligned and twisted yarns were prepared while changing a fiber fineness, a stretching ratio and a drawing/feeding method of the elastic yarn, a twist multiplier when the elastic yarn is twisted with the non-elastic yarns, and a stretch elongation of the non-elastic fiber textured yarn. Various woven fabrics were prepared therefrom and the elongation characteristic thereof (that is, a coefficient of stretch variation in the stretching direction at three points under three kinds of loads) was studied. As a result, it was found that the elongation characteristic free from unevenness is obtainable by a woven fabric prepared by using the stretchable aligned and twisted yarns produced by twisting the elastic fiber at a specific twist multiplier with the non-elastic fiber textured yarn having a specific stretch elongation while controlling a ratio of the elastic fibers. As a result, the surface smoothness of the woven fabric was improved and the twill lines became uniform to facilitate the adhesivity with rubber. It was found that the woven fabric thus obtained is suitable for a toothed belt having a noise-elimination ability, a high durability and a space-saving ability, whereby the present invention has been completed

The present invention is defined as follows:

1. A woven fabric for a toothed belt prepared by using stretchable aligned and twisted yarns in a warp group and/or a weft group, in which an elastic fiber and a non-elastic fiber textured yarn, to which crimps are imported by a false-twisting process or a stuffer box process, are twisted or mixed together, wherein the following items (a) and (b) are satisfied:

   (a) a twist multiplier of the stretchable aligned and twisted yarn is in a range from 1000 to 16000, and
   (b) an elongation at break of the woven fabric in the stretchable direction thereof is in a range from 50 to 200%.

2. A woven fabric for a toothed belt as defined by the above 1, wherein the maximum coefficient of stretch variation of the woven fabric cut into a piece having a width of 5 cm is in a range from 0 to 0.15 in the stretchable direction of the fabric at loads of 9.8 N, 19.6 N and 29.4 N.

3. A woven fabric for a toothed belt as defined by the above 1 or 2, wherein a ratio of the elastic fiber in the stretchable aligned and twisted yarn is 15% by weight or less.

4. A woven fabric for a toothed belt as defined by any one of the above 1 to 3, wherein a fiber fineness of the elastic fiber in the stretchable aligned and twisted yarn is 50 dtex or less.

5. A woven fabric for a toothed belt as defined by any one of the above 1 to 4, wherein the stretching elongation of the non-elastic fiber textured yarn is in range from 2 to 250%.

6. A woven fabric for a toothed belt as defined by any one of the above 1 to 5, wherein two or more continuous floating yarns or dead yarns of the stretchable aligned and twisted yarn are contained in a warp group and/or a weft group of a weave repeat.

7. A woven fabric for a toothed belt as defined by any one of the above 1 to 6, wherein a twist multiplier of the stretchable aligned and twisted yarn is in a range from 3000 to 8000 and an elongation at break is in a range from 80 to 200%.

8. A woven fabric for a toothed belt as defined by any one of the above 1 to 7, wherein the stretchable aligned and twisted yarn contains elastic fibers in a range from 0.5 to 5% by weight, and the elongation at break is in a range from 80 to 200%.

9. A method for producing a woven fabric for a toothed belt, comprising the steps of: preparing a stretchable aligned and twisted yarn by aligning and twisting a stretched elastic fiber with a non-elastic fiber textured yarn, to which crimps are imported by a false-twisting processor a stuffer box process, at a twist multiplier in a range from 1000 to 16000, weaving a fabric from the resultant stretchable aligned and twisted yarns used in a warp group and/or a weft group, and milling the woven fabric thus obtained to have a stretching elongation of 80% or more.

10. A method for producing a woven fabric for a toothed belt as defined by the above 9, wherein the elastic fiber having a fiber fineness in a range from 20 to 150 dtex is stretched and aligned/twisted.

11. A method for producing a woven fabric for a toothed belt as defined by the above 9 or 10, wherein the elastic fiber is stretched at a stretching ratio in a range from 2 to 4 and aligned/twisted.

12. A method for producing a woven fabric for a toothed belt as defined by any one of the above 9 to 11, wherein the aligning and twisting process of the elastic fiber is carried out while controlling the variable range of the stretching tension in a range from 0 to 0.1 cN/dtex.

13. A method for producing a woven fabric for a toothed belt as defined by any one of the above 9 to 12, wherein the aligning and twisting process of the elastic fiber is carried out while using a device for controlling the tension variance during the stretching process thereof.

14. A method for producing a woven fabric for a toothed belt as defined by any one of the above 9 to 13, wherein the aligning and twisting process is carried out by using non-elastic fiber textured yarns having a fiber fineness in a range from 40 to 1000 dtex.

15. A method for producing a woven fabric for a toothed belt as defined by any one of the above 9 to 14, wherein the milling process is carried out by a continuous open-width scouring machine or a jet scouring machine.

16. A toothed belt comprising a belt body made of elastic resin having a tensile member therein and a toothed surface on one side thereof made of elastic resin and covered with a substrate fabric, wherein the substrate fabric is a woven fabric defined by any one of the above 1 to 8.

17. A toothed belt as defined by claim 16 wherein a coefficient of PLD variation is in a range from 0 to 0.15.

18. A toothed belt as defined by any one of claims 16 and 17, wherein the peeling strength of the substrate fabric is in a range from 100 to 200 N/2.54 cm.

The present invention will be described in detail below.

An elastic fiber in the inventive woven fabric for a toothed belt may be produced from a raw material such as polyurethane type or polyether-ester type polymer by a spinning method such as a dry spinning method, a melt-spinning method, a wet spinning method or a chemical reaction spinning method. In other words, the kinds of the polymer and types of the spinning method are not limited. The elongation at break is within a range from 400 to 1000% and, preferably, is excellent in stretchability. Also, a configuration of the fiber is not limited.

For example, while polyurethane elastic fiber is favorably used, which is composed of aromatic diisocyanate such as copolymerized polyalkylene ether diol mainly composed of 4,4'-diphenylmethane diisocyanate, and polyurethane obtained from bifunctional diamine, wherein a number-average molecular weight of urethane part in urethane is in a range from 6000 to 9500, a number-average molecular weight of urea part is in a range from 650 to 950, and a 300% modulus is 0.18 cN/dtex or less, the present invention should not be limited thereto, provided the elongation at break is within the above-mentioned range.

A non-elastic fiber of the non-elastic fiber textured yarn in the inventive woven fabric for a toothed belt is not limited but is preferably a fiber having a high strength at break, such as polyamide type fiber, polyester type fiber, poly (trimethylene terephthalate) type fiber, carbon fiber (PAN type and pitch type), aramid fiber (para type and meta type), polyketone fiber, polyethylene type fiber or PVA fiber. Since a soft woven fabric having a small stress at the initial stage of elongation and capable of finely finishing a tooth portion of a timing belt is obtainable, the non-elastic fiber is preferably of a multi-filament type and has a fineness of filaments forming the non-elastic fiber as small as possible but may be selected by taking the strength thereof into consideration. The breaking strength of the non-elastic fiber is preferably 7 cN/dtex or more for enhancing the durability of the teeth portion, more preferably 16 cN/dtex or more. A cross-sectional shape of the non-elastic fiber is usually circular but may be any shape, such as triangular, W-shape or oval, which should be selected in accordance with purpose thereof.

A textured yarn of non-elastic fibers is a yarn in which the non-elastic fibers are imparted with crimps through a spinning process, a false-twisting process or others. While the crimp of the non-elastic fiber may be preferably imparted, for example, by false-twisting filaments or stuffing the same into a box, the crimping method is not limited thereto, but includes all of known texturing methods provided the above-mentioned effects are obtainable. As a false-twisting means, a well-known false-twisting machine may be used, including a pin type false-twisting machine, a belt-nip type false-twisting machine and a friction type false-twisting machine. A heater type thereof may be either a one-heater type or a double-heater type, but the double-heater type is more preferably in view of the elimination of stress due to texturing to obtain the surface smoothness of the resultant woven fabric.

Suitable crimps are necessary for the non-elastic fiber used in the stretchable aligned and twisted yarn of the inventive woven fabric for the toothed belt. By using the textured yarn as the non-elastic yarn, the resultant woven fabric has a proper thickness which functions as a cushion for absorbing an impact sound generated when a toothed belt obtained'therefrom is intermeshed with a pulley and for mitigating a shock in the teeth portion of the belt, whereby cracking is prevented in a root portion of a tooth to facilitate the durability, which is one object of the present invention.

An index representing a degree of texturing is a stretching elongation measured in accordance with a method B defined by JIS-L-1090 (1977).

The stretching elongation of the non-elastic fiber textured yarn used in the stretchable aligned and twisted yarn is preferably in a range from 2 to 250%, more preferably from 5 to 100%, further preferably from 7 to 50%. If the stretching elongation is less than 2%, the cushion effect becomes insufficient, and when the textured yarn is shrunk in a process for developing the stretchability of the resultant woven fabric, filaments forming the non-elastic fiber textured yarn cause horny projections on the surface of the woven fabric due to high rigidity of the filaments, which also increases the variance of elongation to worsen the surface smoothness of the fabric. If the twist number of the stretchable aligned and twisted yarn increases, the generation of horny projections may be suppressed to a certain extent. However, a yarn structure becomes tight to lower the crimp developing function, whereby it is impossible to obtain a woven fabric having a sufficient stretchability and a good cushion effect. Contrarily, if the stretching elongation exceeds 250%, such a textured yarn has large and strong crimps due to severe texturing conditions. The woven fabric obtained therefrom often becomes worse in surface smoothness and the textured yarn itself is inferior in breaking strength to lower the durability of the fabric. The relationship between the stretching elongation and the breaking strength of the raw yarn is such that it is necessary, in general, to texture the raw yarn under severe conditions for enhancing the stretching elongation, which in turn weakens the breaking strength of the resultant yarn. As a result, the woven fabric using such yarns is also weak in breaking strength to deteriorate the durability. Further, if a non-elastic fiber textured yarn not containing elastic fibers at all is used, the non-elastic fiber textured yarn having the stretching elongation of approximately 200% is often used for the purpose of sufficiently developing the shrinkage of the resultant woven fabric. Such a woven fabric using the non-elastic fiber textured yarn generally requires a jet scouring (of a batch type) for a long time as a milling process for the purpose of developing a necessary shrinkage. Also, as the woven fabric is difficult to shrink, a width of the processed woven fabric is largely variable, which is inferior in dimensional stability as well as free from the uniformity of stretchability.

According to the present invention, a favorable stretchable aligned and twisted yarn is obtainable even if crimps of the non-elastic fiber textured yarn are small. That is, if the non-elastic fibers having small crimps are used alone, it is impossible to obtain a woven fabric having a sufficient elongation characteristic. According to the inventive technique, however, the stretchable aligned and twisted yarn having a uniform surface and an excellent stretchability, as well as being low in the reduction of raw yarn strength, is obtainable. As described later, there is an advantage in that the milling process therefor is capable of sufficiently developing the stretchability even by a continuous open width scouring type and is excellent in process-stability. Further, a breaking strength is larger in this inventive woven fabric than the conventional woven fabric using the conventional false-twisting textured yarn, whereby it is possible to reduce a belt width, and as a result, a space in an engine for an automobile is saved (the engine becomes compact and light).

Recently, toothed belts using high strength fiber (such as aramid type fiber of para type and meta type or polyketone fiber) have been proposed, contemplating the improvement of the durability and the space saving, almost of which uses a covering yarn manufactured by wrapping the high strength fiber around the elastic fiber. As the elastic fiber and the high strength fiber are different from each other in the shrinking force, whew a woven fabric using this covering yarn shrinks, the high strength fiber emerges from the fabric surface to form horny projections, whereby the fabric becomes uneven in stretchability. Also, the non-elastic fiber having a large fiber fineness must be uniformly rotated around the elastic fiber when the covering yarn is produced. To do so, a thick elastic fiber core yarn (in general, corresponding to 310 dtex) is used so that a twist point is not shifted by a centrifugal force due to the rotation of the non-elastic fiber. However, the shift of the twist point has not yet been solved. Accordingly, in the woven fabric using the above-mentioned covering yarn, since a ratio of the elastic fiber becomes larger, the elastic fiber is molten during the vulcanizing process when the toothed belt is molded to generate impurities which worsen the adhesivity of the fabric with rubber and makes the stretchability uneven. Thus, the resultant toothed belt is problematic in noise-elimination and durability.

According to the present invention, crimps as small as to not largely deteriorate the strength are imparted to the high strength fiber which is difficult to be imparted with sufficient crimps, as described above, to result in the inventive stretchable aligned and twisted yarn. By using such a stretchable aligned and twisted yarn, it is possible to provide a woven fabric for a toothed belt in which features of the high strength fiber exist as they are; that is, high in durability, good in resistance to heat and excellent in stretchability. The technical idea of the present invention is applicable to various fields.

The non-elastic fiber textured yarn used in the present invention may be a composite yarn which is a combination of one or more of fibers of different kinds or configurations (prepared by using known means such as composite spinning, interlacing, twisting or fluid jetting) and imparted with crimps. The cross-sectional shape thereof is not particularly limited but may be selected in accordance with the desired uses. Further, the non-elastic fiber textured yarn may be a composite yarn of filamentary textured yarn and spun yarn combined with the former at a ratio not to lower the strength of the resultant composite yarn.

The stretchable aligned and twisted yarn used in the inventive woven fabric for a toothed belt is a yarn in which a stretched elastic fiber is twisted with a non-elastic fiber textured yarn. As twisting means, a conventional twisting machine may be used, such as a double twister, an Italian type twister, a ring twister or a doubling and twisting machine. The stretchable aligned and twisted yarn may be produced by a single process and, if the number of twist per unit length is large, two processes may be employed. When produced in a single process, the elastic fiber and the non-elastic fiber textured yarn are aligned and then imparted with necessary twists, for example, by a ring twister. On the other hand, when two processes are employed, the elastic fiber and the non-elastic fiber textured yarn are first twisted at low twists (20 to 300 T/m) and then further twisted, for example, by a double twister. Also, the elastic fiber and the non-elastic fiber textured yarn may be aligned, for example, by using a winder or a false-twisting machine, then interlaced with each other by air jet, and finally twisted, for example, by a double twister.

When the elastic fiber and the non-elastic fiber textured yarn are aligned on the false-twisting machine, the elastic fiber may be wound together with the false-twisted non-elastic fiber textured yarn after being subjected to an air jet interlacing treatment between the false-twisting zone and the winding section. At this time, the non-elastic fibers not subjected to the false-twisting treatment may be false-twisted in the false-twisting zone to be a non-elastic fiber textured yarn and then interlaced with the elastic fiber. Alternatively, both of the elastic fiber and the non-elastic fibers are subjected together to the air jet interlacing treatment and then false-twisted in the false-twisting zone.

The air jet interlacing device may be provided in a process for aligning the elastic fiber with the non-elastic fiber textured yarn. In general, it is mounted to a rewinder or a ring twister, and immediately after being aligned together, the both pass the air jet interlacing device whereby interlaced points are imparted to the elastic fiber and the non-elastic fiber textured yarn. In the air jet interlacing device, compressed air is ejected from one side of a tunnel or several portions thereof into the tunnel, whereby fibers in the yarn are opened and interlaced with each other to form the interlaced points in the elastic fiber and the non-elastic fiber textured yarn. Such a device is referred to as an interlacer nozzle or an entanglement nozzle. The air jet interlacing device may be a Slide Jet HFP (a trade name) provided from Heberlein Co. Ltd, MK-2 and MK-13 (a trade name) provided from AWA Spindle Co. Ltd, or PC 220 and PC 210 (a trade name) provided from Toray Precision Co. Ltd, but is not limited thereto provided it has the interlacing function.

A device for stretching the elastic fiber, when the stretchable aligned and twisted yarn used in the inventive woven fabric for a toothed belt are prepared stationarily, holds a package of the elastic fiber on a machine such as a doubling and twisting machine or at a position separate therefrom. The elastic fiber drawn from the package at a constant tension is aligned with the non-elastic fiber textured yarn held on a creel of the doubling and twisting machine and then twisted together. A tension of the elastic fiber at which desired stretching ratio and stretching characteristic are obtainable could be determined from a stress-elongation curve of the elastic fiber. Also, such a tension could be determined by measuring a tension of the elastic fiber under which a desired stretching ratio is obtainable.

A fiber fineness mixing ratio of the elastic fiber in the stretchable aligned and twisted yarn of the inventive woven fabric for a toothed belt is represented by a fiber fineness mixing ratio of the elastic fiber after being stretched at a predetermined stretching ratio. In view of the composition state of the elastic fiber and the non-elastic fiber textured yarn, the strength of the belt after being vulcanized and the processability when being aligned and twisted, the fiber fineness mixing ratio is preferably 15% by weight or less. If the stretchable aligned and twisted yarn containing the elastic fiber exceeding 15% by weight is used, the elastic fiber is molten after being vulcanized and forms impurities which lower the adhesivity and cause partial deterioration and a variation in elongation. Further, as a spiral structure of the non-elastic fiber textured yarn solely remains in the teeth portion of the belt, the surface smoothness is damaged and the twill lines of the woven fabric become disordered, which deteriorates the noise-elimination ability and the durability. Accordingly, an amount of the elastic fiber in the stretchable aligned and twisted yarn is preferably as little as possible for processing the vulcanization and improving the performance of the resultant toothed belt; that is, a range from 0.5 to 5% by weight is more preferable. The fiber fineness mixing ratio of the elastic fiber is as follows, for example, in the stretchable aligned and twisted yarn prepared by stretching the.elastic fiber of 44 dtex at a stretching ratio of 3.0 and combining with the non-elastic fiber textured yarn of 470 dtex:

$$44/3.0/(44/3.0 + 470) = 0.030, \text{ i.e., } 3\% \text{ by weight}$$

The stretching ratio of the elastic fiber in the stretchable aligned.and twisted yarn used for the inventive woven fabric for a toothed belt is preferably in a range from 2 to 4, more preferably from 2.5 to 3.5. If the stretching ratio is less than 2, a shrinking force of the elastic fiber becomes insufficient, while if exceeding 4, the number of breakage of the elastic fiber may increase during the aligning and/or twisting process to lower the production yield. In this regard, the stretching ratio of the elastic fiber is an increasing' ratio of a stretched length of the elastic fiber drawn out from the circumference of the package to an original length thereof wound on the circumference of the package. For example, if the drawing speed of the elastic fiber is twice the delivery speed thereof (a rotating speed of the delivery roller), the stretching ratio is 2.

A fiber fineness of the elastic fiber in the stretchable aligned and twisted yarn used in the inventive woven fabric for a toothed belt, that is, a fiber fineness of the elastic fiber in a stretched state is preferably 50 dtex or less, more preferably from 7 to 35 dtex. When the fiber fineness of the elastic fiber in the stretched state is too small, the shrinking force of the stretchable aligned and twisted yarn becomes weak to impart the resultant woven fabric with an insufficient shrinking force. On the contrary, if exceeding 50 dtex, the impurities derived from the molten elastic fiber increases in the belt after the vulcanizing process, which not only adversely effects on the belt strength but also excessively increases the shrinking force of the stretchable aligned and twisted yarn to worsen the handleability particularly when a yarn fineness of the non-elastic fiber textured yarn is less than approximately 500 dtex.

While the twisting direction of the stretchable aligned and twisted yarn when finally twisted is preferably different from the false-twisting direction of the non-elastic fiber textured yarn for the purpose of obtaining a woven fabric having a high shrinking force, the twisting direction or the twist multiplier in the aligned and twisting process may be properly selected in accordance with a necessary magnitude of shrinking force, the appearance of the woven fabric or a function thereof.

While it is necessary to carry out the aligning and/or twisting process under the twist multiplier in a range from 1,000 to 16,000, preferably from 3,000 to 8,000, in view of the stability during the weaving process and the fabric quality, if the twist multiplier is less than 1000, the elastic fiber and the non-elastic fiber textured yarn are liable to separate from each other during the weaving-preparation process or the weaving process due to the abrasion of the yarn with a reed or heald, whereby it is impossible to weave a fabric having a uniform stretchability and a favorable surface smoothness. Contrarily, if the twist multiplier exceeds 16,000, the thickness of the resultant woven fabric becomes too small to have a sufficient cushioning effect for eliminating noise (impact sound) when forming the toothed belt. Also, the stretchability of the resultant fabric becomes insufficient for achieving the object of the present invention.

In this regard, the twist multiplier is defined by the root of the yarn fineness of the stretchable aligned and twisted yarn represented by dtex multiplied by the number of twist per 1 m length of the yarn.

A fiber fineness of the elastic fiber in the stretchable aligned and twisted yarn used for the inventive woven fabric for a toothed belt; i.e., a fiber fineness of the elastic fiber prior to being stretched, is preferably in a range from 20 to 150 dtex, more preferably from 40 to 80 dtex. If the fiber fineness of the elastic fiber prior to being stretched is less than 20 dtex, the shrinking force is lowered and thus it is difficult to obtain a desired milled woven fabric. Also the strength of the elastic fiber becomes insufficient and further deteriorates during the vulcanizing process, resulting in the unsatisfactory quality. Contrarily, if it exceeds 150 dtex, a residual ratio of impurities derived from the elastic fiber after the vulcanizing process becomes larger, which may adversely effect to the durability of the toothed belt.

A yarn fineness of the non-elastic fiber textured yarn in the stretchable aligned and twisted yarn used for the inventive woven fabric for a toothed belt is preferably in a range from 40 to 1,000 dtex, more preferably from 200 to 500 dtex. If it is less than 40 dtex, a ratio of the elastic fiber becomes too large to properly open a balloon during the twisting process, causing the irregular twists. This may worsen the stretching property of the resultant woven fabric. Contrarily, if it exceeds 1000 dtex, the shrinking force of the elastic fiber becomes insufficient relative to such a large yarn fineness, which may disorder the uniformity of the stretching property of the resultant woven fabric.

The stretching tension of the elastic fiber varies in a range from 0 to 0.1 cN/dtex, preferably from 0 to 0.05 cN/dtex when the stretchable aligned and twisted yarn used in the inventive woven fabric for a toothed belt is prepared. If it exceeds 0.1 cN/dtex, the stretching property of the resultant stretchable aligned and twisted yarn in the lengthwise direction of the yarn becomes irregular to result in a toothed belt poor in noise elimination and durability. When the stretchable aligned and twisted yarn is produced, a device for controlling the stretching tension variation of the elastic fiber is used. The device for controlling the stretching tension is, for example, a tension feeder provided from BTSR Co. Ltd or Memminger-IRO Co. Ltd. Thereby, the tension variation caused by the stretching unevenness and the unwinding irregularity existing in a cheese package of the elastic fiber (between outer, middle and inner layers) is eliminated, and a constant amount of elastic fiber can be precisely supplied to obtain a stretchable aligned and twisted yarn having a uniform stretchability in the lengthwise direction, from which a woven fabric for a toothed belt low in irregularity and excellent in stretching property results.

There are many known methods for drawing the elastic fiber from the cheese, for example, a system in which the elastic fiber cheese is placed on two rollers disposed at a gap therebetween and rotating at the same speed (a rolling type) or a method in which the elastic fiber cheese is mounted to a cradle and pressed onto a rotating roller by a spring or a weight. It is difficult, however, to obtain a stretchable aligned and twisted yarn having a uniform stretching property in the lengthwise direction and between separate cheeses because there are many factors for varying the stretching ratio such as slip of the cheese, variation of the contact pressure, difference within one cheese, difference between separate cheeses or unwinding irregularity.

The stretchable aligned and twisted yarn in the inventive woven fabric for a toothed belt may be set by steam at 70 to 90°C for 20 to 60 minutes to fix yarn twists after being subjected to the aligning and twisting process so that the handling characteristics are improved. Also, when a torque of the aligned and twisted yarn is strong, the twist-fixing set may be repeated twice at 70 to 90°C for 20 to 30 minutes.

The stretchable aligned and twisted yarn in the inventive woven fabric for a toothed belt is not limited to the above-mentioned composite yarn composed of the elastic fiber and the non-elastic fiber textured yarn but may be added with another stretchable composite yarn, for example, by aligning and/or twisting means. Or more of other yarns may be added thereto to form a composite yarn. Further, a plurality of non-elastic fiber texture yarns of the same kind or different kinds may be combined with an elastic fiber, or a plurality of elastic fibers may be combined with a non-elastic fiber textured yarn, or a plurality of elastic fibers may be combined with a plurality of non-elastic fiber textured yarns. Furthermore, a spun yarn or others formed of staple fibers may be added to an extent provided the object of the present invention is achievable. The kind and/or the number of the mating yarn may be suitably selected in accordance with the use of the final product.

The stretchable aligned and twisted yarn used in the inventive woven fabric for a toothed belt may be arranged to extend in the longitudinal direction of the toothed belt. If the stretchable aligned and twisted yarn is used both in warp and weft groups, it is arranged in accordance with uses thereof while taking an elongation, a strength of the yarns forming the same or a design of a teeth portion into account. When the stretchable aligned and twisted yarn is used solely in the warp direction or both in the warp and weft directions of the woven fabric, only a length of the fabric necessary for a circumference of a molding frame for molding a toothed belt may be cut in the cutting process for the woven fabric for a toothed belt, which is advantageous in comparison with a woven fabric using the stretchable aligned and twisted yarn solely in the weft direction in that a loss of the woven fabric is less and it is unnecessary to prepare many different lengths.

The elongation at break of the inventive woven fabric for a toothed belt is an elongation at which the woven fabric is broken when the fabric is stretched, which is measured in accordance with a method A (a strip method) of JIS-L-1096 (1999), and in the present invention, this value must be within a range from 50 to 200%. If the elongation at break is less than 50%, a stress value becomes large at an initial stage of the elongation, whereby the woven fabric is difficult to neatly conform to a tooth shape during the vulcanizing process and the resultant belt is large in variation of PLD (the spacing between a center line of a belt tensile member and a surface of a recess of the belt tooth). Thus, the belt is inferior in noise-eliminating ability and durability. Preferably, the elongation at break is in a range from 80 to 200%. If a fiber fineness or a ratio of the elastic fiber in the stretchable aligned and twisted yarn and a stretching elongation of the non-elastic fiber textured yarn are excessively large, or the construction of the weave is loose, the elongation at break may exceed 200%. In such a case, however, the elastic fiber remains after being subjected to the vulcanizing process to deteriorate the adhesivity with rubber, or the non-elastic fiber textured yarn becomes smaller in strength, or the surface smoothness of the woven fabric becomes worse to adversely effect the noise-elimination and the durability.

A coefficient of stretch variation of the inventive woven fabric for a toothed belt is measured as follows. 30 test pieces of 5 cm width are taken from the woven fabric in stretching direction such as warp or weft direction. Each of test pieces is stretched in.the stretchable direction under three kinds of stresses (9.8 N, 19.6 N and 29.4 N) and a deviation of the elongation is calculated, while an average elongation of the 30 test pieces is measured. A value of the coefficient of stretch variation is obtained by dividing the deviation of the elongation with the average elongation. The elongation is measured in accordance with Method A (a strip method) of JIS-L-1096 (1999). The elongation under each of the stress is read from an S-S curve and calculated. The coefficient of stretch variation in the inventive woven fabric for a toothed belt is preferably in a range from 0 to 0.15. If the maximum of the coefficients of stretch variation under three kinds of stresses exceeds 0.15, the variation of elongation becomes large and the surface smoothness is deteriorated due to the thickness unevenness of the woven fabric and the disorder of twill lines. This increases a frictional resistance and disturbs the air flow to generate noise. Also, a contact area thereof with a pulley is locally concentrated, and wear and/or cracking is liable to occur in this area due to stress concentration, resulting in the inferior durability. Such a phenomenon is well suppressed if the coefficient of stretch variation is preferably as small as 0 to 0.1, more preferably from 0 to 0.05. If the coefficient of stretch variation is within this range, the variation of fabric thickness is eliminated to enhance the surface smoothness as well as the neat arrangement of twill lines, whereby the stress concentration and the turbulence of the air stream hardly occur, resulting in the noise elimination and the improved durability. Thus, the object of the present invention is achievable.

In the inventive woven fabric for a toothed belt, the weave repeat thereof preferably has two or more contiguous floating yarns or dead yarns in warp or weft groups formed of the stretchable aligned and twisted yarn. For example, when the inventive stretchable aligned and twisted yarn is used in the warp group, every warp yarn crosses with two weft yarns while interposing a plurality of weft yarns between the two as in a twill weave. A representative thereof is a 2/2 twill weave but another weave may be employed, such as a 2/1 or a 3/2 twill weave, a satin weave, a warp rib weave or a weft rib weave or the combination thereof. This is because, for facilitating the shrinking force of the stretchable aligned and twisted yarn, it is important that the number of cross points between warp yarns and weft yarns is small. While every warp yarn alternately crosses with every weft yarn in a plain weave, the floating yarns occur twice or more in the twill weave, which helps to develop the shrinking force of the yarn, resulting in a high-shrinkage fabric.

The twill weave is preferably employed in the inventive woven fabric for a toothed belt so that a stretch woven fabric having neatly arranged clear twill lines on the surface is obtained. When the twill lines of the woven fabric are regularly arranged, an effect for eliminating a frictional sound and a air stream sound generated when the teeth portion of the toothed belt and the pulley are intermeshed with each other. This is because the frictional sound is intimately related to a size of a contact area between the teeth portion of the belt (fabric surface) and the pulley and, as the contact area is reduced, the frictional sound becomes smaller. If the twill lines of the woven fabric are clear, the contact area becomes smaller (line contact) and as a result, the frictional sound is reduced. Also, if the twill lines are clear and neatly arranged, air stream is smoothly discharged along the twill lines during the contact with the pulley, and a residual air flow is reduced to eliminate the turbulence of the air stream (sound). As a result, the air stream sound is suppressed.

The stretchable aligned and twisted yarn may be used solely in one of warp and weft groups of the inventive woven fabric for a toothed belt or in both of the warp and weft groups. If the stretchable aligned and twisted yarn is used solely in one of the warp and weft groups, for example, in the weft group, the warp yarn may be any of a non-processed yarn, a twisted yarn, a false-twisted yarn or others. On the other hand, if the stretchable aligned and twisted yarn is used solely in the warp group, the weft yarn may be any of a non-processed yarn, a twisted yarn, a false-twisted yarn or others. Further, the stretchable aligned and twisted yarn and the non-elastic fiber textured yarn after being twisted may be alternately arranged at a ratio of 1 : 1 or 2 : 2 in the warp and/or weft groups to form a woven fabric. Alternatively, different kinds of stretchable aligned and twisted yarns may be properly arranged, or twisted yarns of S-twist or Z-twist may be properly arranged so that the desired fabric properties such as a stretch elongation is obtained in accordance with uses.

The favorable surface smoothness of the inventive woven fabric for a toothed belt is obtained by the convergence of the warp and weft yarns forming the woven fabric and the arrangement thereof in the woven fabric at a regular pitch. That is, the surface smoothness is judged by a criterion whether or not the warp and/or weft yarns forming the woven fabric have no large indentation and single fibers forming the yarn are regularly and neatly arranged.

The coefficient of PLD variation in the inventive toothed belt is obtained by measuring PDL (a distance between a center line of a tensile member for the belt and a surface of a recess of the belt tooth) at optional 30 points and dividing the variation thereof by an average value of PLD, and is preferably in a range from 0 to 0.15. Concretely, a picture of a lateral surface of the belt is taken while enlarging it 50 times under a microscope and the PLD is read therefrom. If the coefficient of stretch variation exceeds 0.15, the intermeshing of the teeth portion of the belt with the pulley becomes unstable to worsen the durability of the belt and increase noises.

The peeling strength of the substrate fabric for the inventive toothed belt is an index for estimating the adhesivity of a rubber portion of the belt with the substrate fabric, and preferably in a range from 100 to 200 N/2.54 cm. If this value is less than 100 N/2.54 cm, the belt is inferior in durability and, as a result, the belt cannot be used for a long period.

The inventive woven fabric for a toothed belt is woven from a stretchable aligned and twisted yarn used as warp and/or weft groups, which yarn is obtained by aligning and/or twisting an elastic fiber and a non-elastic fiber textured yarn at a twist multiplier in a range from 1,000 to 16,000, and is milled. According to this method, the woven fabric for a toothed belt having an elongation at break of 80% or more is obtainable Means for weaving the inventive woven fabric for a toothed belt includes, for example, a rapier loom, an air jet loom, a water jet loom, a projectile loom or others. When a weft yarn having a large shrinking force is used for weaving the inventive fabric, a full temple or a temple having stronger force may be preferably used in the loom. When the stretchable aligned and twisted yarn is used as a warp group, an initial portion of the warp yarns drawn out from a warp beam is preferably fixed by means of a hot plate or with a sizing agent to improve the handleability so that the warp yarns are smoothly inserted through a reed or a heald in the preparatory weaving process.

In the milling process in the method for producing the inventive woven fabric for a toothed belt, the inventive woven fabric for.a toothed belt is shrunk after being woven, during which a greige fabric may be treated in a widened state (by using a continuous open width scouring machine) or by a jet scouring machine having a strong flexing effect. That is, optional treatment styles may be employed in accordance with a greige fabric characteristics and/or uses. When a warp-directional stretch fabric is processed, the continuous open width scouring machine is favorably used. In such a case, it is possible to complete the milling for a short time due to the excellent stretchability of the stretchable aligned and twisted yarn.

BEST MODE FOR CARRYING OUT THE INVENTION

The present invention will be described below in more detail with reference to Examples.

In this regard, the Examples were measured by the following methods.

(1) Elongation at break of woven fabric The measurement is carried out in accordance with Elongation, Method A (strip method) defined by JIS-L-1096 (1999).

(2) Maximum coefficient of stretch variation in the stretchable direction of woven fabric

A coefficient of stretch variation of a woven fabric is a value obtained by dividing the deviation of elongation of the fabric stretched in the stretchable direction under three kinds of stresses (9.8 N/5 cm, 19.6 N/5 cm and 29.4 N/5 cm) with an average elongation of 30 test pieces taken from optional positions of the woven fabric. The maximum value of the three was referred to as a maximum coefficient of stretch variation. In this regard, the elongation is measured in accordance with Elongation, Method A (strip method) defined by JIS-L-1096 (1999), and the respective values were read from S-S curves and used for the calculation.

(3) Stretching elongation of non-elastic fiber textured yarn

The measurement is carried out in accordance with Method B defined by JIS-L-1090 (1977).

(4) Coefficient of PLD variation of toothed belt

PLD (a distance between a center line of a belt tensile member and a surface of a recess of a tooth in the belt) was measured at optional 30 points, and the variation thereof was divided with an average value of PLD. In this regard, a picture of a lateral surface of the belt is taken while enlarging it 50 times under a microscope and the PLD is read therefrom. If this value is less than 0.10, this belt was classified to rank A; if in a range from 0.10 to 0.15, classified to rank B; and if exceeding 0.15, classified to rank C, in which ranks A and B are acceptable.

(5) Peeling strength between substrate fabric for toothed belt and rubber portion.

Toothed belts were prepared from milled woven fabrics as described in Examples 17 to 32. The peeling test was carried out thereon in accordance with JIS-K-6256 (1999) to determine the peeling strength. If this value exceeds 150 N/2.54 cm, this belt was classified to rank A; if in a range from 100 to 150 N/2.54 cm, classified to rank B; and if less than 100 N/2.54 cm, classified to rank C, in which ranks A and B are acceptable.

In this regard, the adhesion was carried out by using RFL liquid (H-NBR type latex) at a pickup in a range from 12 to 13% by weight. After being dried at 160 °C for five minutes, the heat treatment was carried at 200°C for three minutes. The rubber was of H-NBR type and vulcanized at 150°C for 30 minutes.

(6) Measurement of noise generated from toothed belt (noiseless characteristic)

A running test was carried out by circulating a toothed belt between driving and driven pulleys having 18 teeth, respectively, under a load of 4 HP at 3000 and 6000 rpm in an atmospheric temperature of 25°C. Noise was measured in a sound-insulation room by a microphone disposed at a position 15 cm above the drive pulley. A normal noise meter NA-20 provided by Rion Co. Ltd (a trade name), satisfying the specification defined by JIS-C-1502, was used for the measurement.

If this value was less than 90 dB at 3000 rpm, this belt was classified to rank A; if in a range from 90 to 95 dB, classified to rank B; and if exceeding 95 dB, classified to rank C. If this value was less than 105 dB at 6000 rpm, this belt was classified to rank A; if in a range from 105 to 110 dB, classified to rank B; and if exceeding 110 dB, classified to rank C, in which ranks A and B are acceptable.

(7) Durability of toothed belt

A running test was carried out under the same condition as in the noise measurement except that the rotational speed is changed to 1500 rpm, and a time required for generating cracks in the tooth portion was measured. If this value exceeds 200 hours, this belt was classified to rank A; if in a range from 150 to 200 hours, classified to rank B; and if less than 150 hours, classified to rank C, in which ranks A and B are acceptable.

(8) Neatness and clearness of twill lines on a surface of woven fabric for a toothed belt

The estimation was conducted in accordance with the following criteria by five panels having five years or more experience in the production and inspection of a woven fabric, and represented by an average value. If the average value is less than W1, the fabric was classified to rank A; if in a range from W1 to W2, classified to rank B; and if exceeding W2, classified to rank C, in which ranks A and B are acceptable.

W0: The twill lines are clearly visible and uniformly arranged.
W1: The twill lines are partially unclear but clearly visible as a whole.
W2: The twill lines are somewhat unclear and disordered.
W3: The twill lines is unclear in some portions and the disorder of the arrangement is rather conspicuous.
W4: The twill lines are unclear as a whole and the arrangement thereof is disordered so that roughness is obvious to the observer.

(9) Total estimation

If rank A is given to all the above-mentioned estimations (4) to (8), the toothed belt is classified to rank A (acceptable).

If there is no rank C but one or more rank B, the toothed belt is classified to rank B (acceptable).

If there is rank C in any one of the estimation, the toothed belt is classified to rank C (unacceptable).

(Example 1)

A polyurethane type elastic fiber of 44 dtex (Roica; a trade name, provided from ASAHI KASEI Co. Ltd) was used as the elastic fiber, and two non-elastic fiber textured yarns (having a stretch elongation of 19.1%) were prepared by false-twisting polyamide multifilament yarns of 235 dtex/35f (Leona; a trade name, provided from ASAHI KASEI Co. Ltd) by means of a friction type false-twisting machine (Type FK-6 provided by Barmag Co. Ltd) at a false-twisting speed of as high as 500 m/min in the Z-twist direction. The elastic fiber and the non-elastic fiber textured yarns were aligned and twisted on a doubling and twisting machine (Type DTH; provided from K.K. ISHIKAWA SEISAKUSHO) at a spindle rotational speed of 5000 rpm and a twist number of 200 T/m (in the S-twist direction, the twist multiplier of 4403), while feeding the elastic fiber at a tension of 7.94 cN/fiber (corresponding to a stretching ratio of 3.0) through a tension feeder (KTF/25HPS type; provided from BTSR Co. Ltd) and the non-elastic fiber textured yarn at a tension of 0.03 cN/dtex. Thus, a stretchable aligned and twisted yarn was obtained. The feeding tension of the elastic fiber during the aligning and/or twisting process was determined from a stress-strain curve thereof measured in advance as a stress value corresponding to a stretching ratio of 3.0. The fiber fineness of the elastic fiber in the stretchable aligned and twisted yarn was 44/3.0 = 14.7 dtex, a ratio of which is 3.0% by weight.

The resultant stretchable aligned and/or stretched yarn was used as a weft group, and a polyamide multifilament yarn (Leona, a trade name; provided from ASAHI KASEI Co. Ltd) of 235 dtex/35f (twist number of 180 T/m in the S-twist direction) was used as a warp group, from which a 2/2 twill fabric was woven by using a rapier loom (provided from Somet Co. Ltd) at a loom rotational speed of 300 rpm. Then, the obtained greige fabric was subjected to a conventional procedure of jet scouring-tentering-finishing.

The resultant woven fabric had a warp density of 88 ends/2.54 cm, a weft density of 67 ends/2.54 cm and an elongation at break in the weft direction of 154%. As shown in Table 1, the maximum coefficient of stretch variation of the woven fabric was 0.02 which is very favorable.

(Example 2)

A 2/2 twill fabric was woven by using an air jet loom (Type ZA209; provided from TSUDAKOMA KOGYO K.K.) at a loom rotational speed of 400 rpm, while exchanging the warp group (the S-twist direction) with the weft group in Example 1. Then, the obtained greige fabric was subjected to a conventional procedure of continuous open width scouring-drying-finishing. The resultant woven fabric had a warp density of 67 ends/2.54 cm, a weft density of 85 ends/ 2.54 cm and an elongation at break in the warp direction of 140%. As shown in Table 1, the maximum coefficient of stretch variation of the woven fabric was 0.04 which is very favorable.

(Example 3)

In the same manner as in Example 1, a stretchable aligned and twisted yarn having a twist number of 200 T/m (in the S-twist direction, the twist multiplier of 3740) was prepared by using a polyurethane type elastic fiber of 44 dtex (Roica, a trade name; provided from ASAHI KASEI Co. Ltd) and a non-elastic fiber textured yarn (having a stretch elongation of 51.0%) was prepared by false-twisting a polyketone fiber yarn of 335 dtex/250f by means of a pin type false-twisting machine (Type IVF-338 provided by ISHIKAWA SEISAKUSHO K.K.) at a false-twisting speed of 50 m/min in the Z-twist direction. The fiber fineness of the elastic fiber in the stretchable aligned and twisted yarn was 44/3.0 = 14.7 dtex, a ratio of which is 4.2% by weight.

Then, a fabric was woven in the same manner as in Example 1, while using the resultant stretchable aligned and/or stretched yarn as a weft group. The obtained greige fabric was subjected to a conventional procedure of continuous open width scouring-drying-finishing. The resultant woven fabric had a warp density of 80 ends/2.54 cm, a weft density of 79 ends/2.54 cm and an elongation at break in the weft direction of 110%. As shown in Table 1, the maximum coefficient of stretch variation of the woven fabric was 0.08 which is very favorable.

In this regard, the polyketone fiber used in this Example was prepared in the following method. Polyketone polymer having an intrinsic viscosity of 5.9 dl/g in which ethylene prepared by conventional procedure is completely copolymerized with carbon monoxide and poly (1-oxotrimethylene) were added to an aqueous solution containing zinc chloride of 35.5% by weight and calcium chloride of 64.5% by weight and agitated at 80°C for two hours to obtain a dope having a polymer concentration of 6.5% by weight. The resultant dope was heated to 80 °C, and then filtrated through a filter of 20 $\mu$m mesh. The dope was extruded from a spinneret having 250 orifices, each having a diameter of 0.10 mm and L/D of 1, into water after passing through an air gap of 10 mm, and solidified.

The solidified fiber was subsequently rinsed with hydrochloric acid of 1% concentration and then rinsed with water, which was taken up at a take-up speed of 2.5 m/min. The resultant yarn was dried at 200°C to be an undrawn yarn. This undrawn yarn is subjected to a first drawing at 250°C, to a second drawing at 240°C and then to a third drawing at 250 °C so that a total draw ratio is 15.5. Thus, a drawn yarn (polyketone fiber yarn) of 335 dtex/250f was obtained.

(Example 4)

In the same manner as in Example 3, a stretchable aligned and twisted yarn having a twist number of 200 T/m (in the S-twist direction, the twist multiplier of 4190) was prepared by using a polyurethane type elastic fiber of 78 dtex (Roica, a trade name; provided from ASAHI KASEI Co. Ltd) and a non-elastic fiber textured yarn (having a stretch elongation of 10.4%) was prepared by false-twisting a para-type aramid fiber yarn of 413 dtex/250f (Twaron, provided from Enka Co. Ltd) by means of a pin type false-twisting machine (Type IVF-338 provided by ISHIKAWA SEISAKUSHO K.K.) at a false-twisting speed of 50 m/min in the Z-twist direction, while feeding the elastic fiber at a tension of 8.92 cN/ fiber (corresponding to a stretching ratio of 3.0). The fiber fineness of the elastic fiber in the stretchable aligned and twisted yarn was 78/3.0 = 26.0 dtex, a ratio of which is 5.6% by weight.

Then, a fabric was woven in the same manner as in Example 3. The obtained greige fabric was subjected to a conventional procedure of continuous open width scouring-drying-finishing. The resultant woven fabric had a warp density of 78 ends/2.54 cm, a weft density of 70 ends/2.54 cm and an elongation at break in the weft direction of 90%. As shown in Table 1, the maximum coefficient of stretch variation of the woven fabric was 0.10 which is very favorable.

(Example 5)

A woven fabric was obtained in the same manner as in Example 1, except that the twist number of the stretchable aligned and twisted yarn is changed to 400 T/m (the twist multiplier of 8806 in the S-twist direction). The resultant woven fabric had a warp density of 86 ends/2.54 cm, a weft density of 67 ends/2.54 cm and an elongation at break in the weft direction of 138%. As shown in Table 1, the maximum coefficient of stretch variation of the woven fabric was 0.05 which is very favorable.

(Example 6)

A woven fabric was obtained in the same manner as in Example 1, except that the twist number of the stretchable aligned and twisted yarn is changed to 700 T/m (the twist multiplier of 15411 in the S-twist direction). The resultant woven fabric had a warp density of 72 ends/2.54 cm, a weft density of 67 ends/2.54 cm and an elongation at break in the weft direction of 60%. As shown in Table 1, the maximum coefficient of stretch variation of the woven fabric was 0.13 which is favorable.

(Comparative example 1)

A woven fabric was obtained in the same manner as in Example 1, except that the twist number of the stretchable aligned and twisted yarn is changed to 800 T/m (the twist multiplier of 17613 in the S-twist direction). The resultant woven fabric had a warp density of 67 ends/2.54 cm, a weft density of 67 ends/2.54 cm and an elongation at break in the weft direction of 45%. This woven fabric was poor in bulky feeling derived from the textured yarn. The maximum coefficient of stretch variation of the woven fabric was 0.17 which is unfavorable.

(Comparative example 2)

A woven fabric was obtained in the same manner as in Example 1, except that the twist number of the stretchable aligned and twisted yarn is changed to 40 T/m (the twist multiplier of 881 in the S-twist direction). The resultant woven fabric had a warp density of 88 ends/2.54 cm, a weft density of 67 ends/2.54 cm and an elongation at break.in the weft direction of 148%. During the weaving process, the shift of elastic fiber used as a core often occurred, and during the milling process, the width variation of the fabric also became large. Thereby, the stretchable characteristics in the fabric-width direction were irregular. As shown in Table 1, the maximum coefficient of stretch variation was as worse as 0.26.

(Comparative example 3)

A woven fabric was obtained in the same manner as in Example 1, except that the non-elastic fiber yarn was changed to a polyamide multifilament yarn (Leona, a trade name; provided from ASAHI KASEI Co. Ltd) of 235 dtex/35f (having a stretch elongation of 1.1%). The resultant woven fabric had a warp density of 86 ends/2.54 cm and a weft density of 67 ends/2.54 cm. In the resultant woven fabric, there were many horny projections of the non-elastic fibers on the fabric surface, and the twill lines were unclear. The stretching elongation in the weft direction was 131%, and as shown in Table 1, the maximum coefficient of stretch variation was as worse as 0.18.

(Comparative example 4)

A woven fabric was obtained in the same manner as in Example 1, except that the weave repeat of a 2/2 twill weave was changed to a plain weave. The resultant woven fabric had a warp density of 57 ends/2.54 cm, a weft density of 57 ends/2.54 cm and an elongation at break in the weft direction of 40%. The resultant woven fabric was harsh and rough in hand and lacked elongation. The maximum coefficient of stretch variation of this woven fabric was as poor as 0.18.

(Example 7)

A fabric was woven and milled in the same manner as in Example 1, except that polyurethane type elastic fiber (Roica, a trade name, provided from ASAHI KASEI Co. Ltd) having a fiber fineness of 78 dtex was used as an elastic fiber and fed at a tension of 7.91 cN/yarn (corresponding to a stretching ratio of 2.3), and one polyamide multifilament yarn of 235 dtex/35f (Leona; a trade name, provided from ASAHI KASEI Co. Ltd) having a twist number of 300 T/m (a twist multiplier of 4949 in the S-twist direction) was used as a non-elastic fiber textured yarn. The fiber fineness of the elastic fiber in the stretchable aligned and twisted yarn was 78/2.3 = 33.9 dtex, a ratio of which is 12.6% by weight. The resultant woven fabric had a warp density of 93 ends/2.54 cm, a weft density of 90 ends/2.54 cm and an elongation at break in the weft direction of 190%. As shown in Table 1, the maximum coefficient of stretch variation of the woven fabric was 0.09 which is favorable.

(Comparative example 5)

A fabric was woven and milled in the same manner as in Example 1, except that polyurethane type elastic fiber (Roica, a trade name, provided from ASAHI KASEI Co. Ltd) having a fiber, fineness of 155 dtex was used as an elastic fiber and fed at a tension of 13.07 cN/yarn (corresponding to a stretching ratio of 2.5), and two non-elastic fiber textured yarns (having a stretch elongation of 27.3%) were prepared by false-twisting polyamide filament yarns of 156 dtex/35f (Leona; a trade name, provided from ASAHI KASEI Co. Ltd) by means of a friction type false-twisting machine (Type FK-6 provided by Barmag Co. Ltd) at a false-twisting speed of as high as 500 m/min in the Z-twist direction and twisted together at a twist number of 250 T/m (a twist multiplier of 4835 in the S-twist direction).
The fiber fineness of the elastic fiber in the stretchable aligned and twisted yarn was 155/2.5 = 62.0 dtex, a ratio of which is 16.7% by weight. The resultant woven fabric had a warp density of 97 ends/2.54 cm, a weft density of 76 ends/2.54 cm and an elongation at break in the weft direction of 220%. As the ratio of the elastic fiber was excessively large, the initial stretching stress of the woven fabric became too high. The maximum coefficient of stretch variation of the woven fabric was 0.11.

(Example 8)

A fabric was woven and milled in the same manner as in Example 1, except that polyurethane type elastic fiber (Roica, a trade name, provided from ASAHI KASEI Co. Ltd) having a fiber fineness of 78 dtex was used as an elastic fiber and fed at a tension of 8.92 cN/yarn (corresponding to a stretching ratio of 3.0), and a non-elastic fiber textured yarn (having a stretch elongation of 19.1%) was prepared by four polyamide filament yarns of 235 dtex/35f (Leona; a trade name, provided from ASAHI KASEI Co. Ltd), which were twisted together at a twist number of 65 T/m (a twist multiplier of 2020 in the S-twist direction).
The fiber fineness of the elastic fiber in the stretchable aligned and twisted yarn was 78/3.0 = 26.0 dtex, a ratio of which is 2.7% by weight. The resultant woven fabric had a warp density of 78 ends/2.54 cm, a weft density of 47 ends/2.54 cm and an elongation at break in the weft direction of 98%. As shown in Table 1, the maximum coefficient of stretch variation of the woven fabric.was 0.08 which is favorable.

(Example 9)

A fabric was woven and milled in the same manner as in Example 1, except that the elastic fiber was fed at a tension of 4.02 cN/dtex (corresponding to the stretching ratio of 3.0) and twisted with the non-elastic fiber textured yarn at a twist number of 330 T/m (a twist multiplier of 7211 in the S-twist direction). The fiber fineness of the elastic fiber in the stretchable aligned and twisted yarn was 22/3.0 = 7.3 dtex, a ratio of which is 1.5% by weight. The resultant woven fabric had a warp density of 77 ends/2.54 cm, a weft density of 67 ends/2.54 cm and an elongation at break in the weft direction of 90%. As shown in Table 1, the maximum coefficient of stretch variation of the woven fabric was 0.08 which is favorable.

(Example 10)

A fabric was woven and milled in the same manner as in Example 1, except that the non-elastic fiber textured yarn was changed to a polyamide multifilament yarn (Leona; a trade name, provided from ASAHI KASEI Co. Ltd) of 235 dtex false-twisted by a pin type false-twisting machine (Type IVF-338 provided by ISHIKAWA SEISAKUSHO K.K.) at a false-twisting speed of 50 m/min in the Z-twist direction.
The fiber fineness of the elastic fiber in the stretchable aligned and twisted yarn was 44/3.0 = 14.7 dtex, a ratio of which is 3.0% by weight. The resultant woven fabric had a warp density of 90 ends/2.54 cm, a weft density of 67 ends/2.54 cm and an elongation at break in the weft direction of 173%. As shown in Table 1, the maximum coefficient of stretch variation of the woven fabric was 0.02 which is very favorable

(Example 11)

A fabric was woven and milled in the same manner as in Example 1, except that the stretching elongation of the non-elastic fiber textured yarn was changed to 265.5%. The fiber fineness of the elastic fiber in the stretchable aligned and twisted yarn was 44/3.0 = 14.7 dtex, a ratio of which is 3.0% by weight. The resultant woven fabric had a warp density of 92 ends/2.54 cm, a weft density of 67 ends/2.54 cm and an elongation at break in the weft direction of 187%. As shown in Table 1, the maximum coefficient of stretch variation of the woven fabric was 0.03 which is very favorable, but the strength of the non-elastic fiber textured yarn was slightly lower due to a severe false-twisting condition.

(Example 12)

A polyurethane type elastic fiber of 22 dtex (Roica; a trade name, provided from ASAHI KASEI Co. Ltd) was used as the elastic fiber, and one non-elastic fiber textured yarn (having a stretch elongation of 190.3%) were prepared by false-twisting polyamide multifilament yarns of 34 dtex/26f (Leona; a trade name, provided from ASAHI KASEI Co. Ltd) by means of a friction type false-twisting machine (Type FK-6 provided by Barmag Co. Ltd) at a false-twisting speed of 650 m/min in the Z-twist direction. The elastic fiber and the non-elastic fiber textured yarns were intended to be aligned and twisted at a twist number of 700 T/m (in the S-twist direction, the twist multiplier of 4400), while feeding the elastic fiber at a tension of 5.65 cN/fiber (corresponding to a stretching ratio.of 4.0) through a tension feeder (KTF/25HPS type; provided from BTSR Co. Ltd) and feeding the non-elastic fiber textured yarn at a tension of 0.03 cN/dtex. However, as the yarn fineness was small and the feeding tension of the elastic fiber was excessively large, the yarn ballooning was unstable during the twisting process, an unevenness generated in the resultant twisted yarn. From this yarn, a fabric was woven and milled in the same manner as in Example 1.
The fiber fineness of the elastic fiber in the stretchable aligned and twisted yarn was 22/4.0 = 5.5 dtex, a ratio of which is 13.9% by weight. The resultant woven fabric had a warp density of 91 ends/2.54 cm, a weft density of 223 ends/2.54 cm and an elongation at break in the weft direction of 150%. As shown in Table 1 the maximum coefficient of stretch variation of the woven fabric was 0.12.

(Example 13)

A polyurethane type elastic fiber of 78 dtex (Roica; a trade name, provided from ASAHI KASEI Co. Ltd) was used as the elastic fiber, and five non-elastic fiber textured yarns (having a stretch elongation of 19.1%) were prepared by false-twisting polyamide multifilament yarns of 235 dtex/35f (Leona; a trade name, provided from ASAHI KASEI Co. Ltd) by means of a friction type false-twisting machine (Type FK-6 provided by Barmag Co. Ltd) at a false-twisting speed of 500 m/min in the Z-twist direction. The elastic fiber and the non-elastic fiber textured yarns were intended to be aligned and twisted at a twist number of 120 T/m (in the S-twist direction, the twist multiplier of 4400), while feeding the elastic fiber at a tension of 8.92 cN/fiber (corresponding to a stretching ratio of 3.0) through a tension feeder (KTF/25HPS type; provided from BTSR Co. Ltd) and feeding the non-elastic fiber textured yarn at a tension of 0.03 cN/dtex. However, since the yarn fineness was large, the yarn ballooning was excessively open during the twisting process and the yarn was brought into contact with a separator disposed between adjacent spindles, which made the twisting operation unstable. From this yarn, a fabric was woven and milled in the same manner as in Example 1.
The fiber fineness of the elastic fiber in the stretchable aligned and twisted yarn was 78/3.0 = 26.5 dtex, a ratio of which is 2.2% by weight. The resultant woven fabric had a warp density of 78 ends/2.54 cm, a weft density of 42 ends/2.54 cm and an elongation at break in the weft direction of 98%. As shown in Table 1, the maximum coefficient of stretch variation of the woven fabric was 0.12, which was favorable. As the twisting process was unstable, the twill lines of the woven fabric were slightly unclear.

(Example 14)

A fabric was woven and milled in the' same manner as in Example 1, except that the feeding tension of the elastic fiber is changed to 6.82 cN/dtex (corresponding to a stretching ratio of 1.7). The fiber fineness of the elastic fiber in the stretchable aligned and twisted yarn was 78/1.7 = 45.9 dtex, a ratio of which is 8.9% by weight. The resultant woven fabric had a warp density of 77 ends/2.54 cm, a weft density of 66 ends/2.54 cm and an elongation at break in the weft direction of 88% which slightly lacks stretchability. The maximum coefficient of stretch variation of the woven fabric was 0.12, which was favorable.

(Example 15)

A fabric was woven and milled in the same manner as in Example 1, except that the feeding tension of the elastic fiber was changed to 12.71 cN/dtex (corresponding to a stretching ratio of 4.2). The fiber fineness of the elastic fiber in the stretchable aligned and twisted yarn was 44/4.2 = 10.5 dtex, a ratio of which is 2.2% by weight. However, because of the excessively large feeding tension.of the elastic fiber during the aligning and/or twisting process, the production yield was extremely low. The resultant woven fabric had a warp density of 91 ends/2.54 cm, a weft density of 67 ends/2.54 cm and an elongation at break in the weft direction of 173%. The maximum coefficient of stretch variation of the woven fabric was 0.13. As the twisting process was unstable, the twill lines of the woven fabric were slightly unclear.

(Example 16)

A fabric was woven and milled in the same manner as in Example 1, except that the stretchable aligned and twisted yarn was obtained by placing a cheese of the elastic fiber on a pair of feed rolls so that the elastic fiber was fed at a stretching ratio of 3.0. The fiber fineness of the elastic fiber in the stretchable aligned and twisted yarn was 44/3.0 = 14.7 dtex, a ratio of which is 3.0% by weight. The resultant woven fabric had a warp density of 87 ends/2.54 cm, a weft density of 67 ends/2.54 cm and an elongation at break in the weft direction of 143%. As shown in Table 1, the tension variation was observed due to various factors such as variation of package shape, unevenness of winding tension in the cheese or slip of the cheese during the unwinding thereof. A range of the tension variation reached 0.07 cN/yarn. The maximum coefficient of stretch variation of the woven fabric was 0.11, which was favorable. As the twisting process was unstable, the twill lines of the woven fabric were slightly unclear.

(Example 17)

A fabric was woven and milled in the same manner as in Example 1, except that polyurethane type elastic fiber (Roica, a trade name, provided from ASAHI KASEI Co. Ltd) having a fiber fineness of 17 dtex was used as an elastic fiber and fed at a tension of 3.22 cN/yarn (corresponding to a stretching ratio of 3.0), and one polyamide multifilament yarn of 235 dtex/35f (Leona; a trade name, provided from ASAHI KASEI Co. Ltd) having a twist number of 300 T/m (a twist multiplier of 4654 in the S-twist direction) was used as a non-elastic fiber textured yarn.

The fiber fineness of the elastic fiber in the stretchable aligned and twisted yarn was 17/3.0 = 5.7 dtex, a ratio of which is 2.4% by weight. The resultant woven fabric had a warp density of 70 ends/2.54 cm, a weft density of 95 ends/2.54 cm and an elongation at break in the weft direction of 55%. As shown in Table 1, the maximum coefficient of stretch variation of the woven fabric was 0.14 which is favorable.

(Examples 18 to 34 and Comparative examples 6 to 10)

The woven fabrics prepared in Examples 1 to 17 and Comparative examples 1 to 5 were pretreated, cut and sewn to be pieces having a belt shape by conventional procedure so that the stretchable aligned and twisted yarns extend in the lengthwise direction of the belt. The resultant piece was put on a cylindrical mold having a toothed outer circumference and glass fibers were wrapped around the piece as a core. Further, the outer circumference thereof was covered with a rubber sheet, which was then vulcanized by a conventional press-fitting method. The resultant product was removed from the mold and.cut to have a predetermined width. Thus, a toothed belt was obtained. The toothed belt had a circumferential length of 902 mm, a width of 19 mm and a number of teeth of 125 T.

(Example 18)

A toothed belt in Example 18 was made from the woven fabric prepared in Example 1. As shown in Table 3, this toothed belt was excellent in performance due to effects of the inventive woven fabric for a toothed belt.

(Example 19)

A toothed belt in Example 19 was made from the woven fabric prepared in Example 2. As shown in Table 3, this toothed belt was excellent in performance due to effects of the inventive woven fabric for a toothed belt.

(Example 20)

A toothed belt in Example 20 was made from the woven fabric prepared in Example 3. As shown in Table 3, this toothed belt was excellent in performance due to effects of the inventive woven fabric for a toothed belt.

(Example 21)

A toothed belt in Example 21 was made from the woven fabric prepared in Example 4. As shown in Table 3, this toothed belt was excellent in performance due to effects of the inventive woven fabric for a toothed belt.

(Example 22)

A toothed belt in Example 22 was made from the woven fabric prepared in Example 5. As shown in Table 3, this toothed belt was excellent in performance due to effects of the inventive woven fabric for a toothed belt.

(Example 23)

A toothed belt in Example 23 was made from the woven fabric prepared in Example 6. As shown in Table 3, this toothed belt was excellent in performance due to effects of the inventive woven fabric for a toothed belt.

(Comparative example 6)

A toothed belt in Comparative example 6 was made from the woven fabric prepared in Comparative example 1. As the woven fabric was small in thickness (bulkiness), the cushioning effect of the non-elastic fiber textured yarn was insufficient. As a result, as shown in Table 3, high noise-suppression properties and durability were not obtainable.

(Comparative example 7)

A toothed belt in Comparative example 7 was made from the woven fabric prepared in Comparative example 2. The fibers in the non-elastic fiber textured yarn were disordered on the fabric surface due to the lack of twist and the twill lines were unclear. Also, the elastic fiber was broken at several points. Accordingly, the maximum coefficient of stretch variation of the woven fabric was large and the uniform elongation along the teeth of the belt was not obtained. As a result, as shown in Table 3, the coefficient of PLD variation was large to deteriorate various performances of the belt.

'(Comparative example 8)

A toothed belt in Comparative example 8 was made from the woven fabric prepared in Comparative example 3. As the maximum coefficient of stretch variation of the woven fabric was large, the uniform elongation along the teeth of the belt was not obtained. As a result, as shown in Table 3, the coefficient of PLD variation was large to deteriorate various performances of the belt.

(Comparative example 9)

A toothed belt in Comparative example 9 was made from the woven fabric prepared in Comparative example 4. As the elongation of the woven fabric was low, the uniform elongation along the teeth of the belt was not obtained. As a result, as shown in Table 3, the coefficient of PLD variation was large to deteriorate various performances of the belt. As the plain weave woven fabric was less in thickness, the cushioning effect of the non-elastic fiber textured yarn was insufficient.

(Example 24)

A toothed belt in Example 24 was made from the woven fabric prepared in Example 7. As shown in Table 3, this toothed belt was excellent in performance due to effects of the inventive woven fabric for a toothed belt.

(Comparative example 10)

A toothed belt in Comparative example 10 was made from the woven fabric prepared in Comparative example 5. The twill lines on the fabric surface were very irregular and the peeling strength was as worse as 95 N/2.54 cm. When this toothed belt was cut in the widthwise direction and the cross-section of the stretchable aligned and twisted yarn was observed through a microscope, it was found that there are many traces of molten elastic fiber. Also, portions of the stretchable aligned and twisted yarn, in which the elastic fiber has existed before, formed voids. Rubber entered the voids, whereby the disorder of filaments in the non-elastic fiber textured yarn were conspicuous.

(Example 25)

A toothed belt in Example 25 was made from the woven fabric prepared in Example 8. As shown in Table 3, this toothed belt was excellent in performance due to effects of the inventive woven fabric for a toothed belt.

(Example 26)

A toothed belt in Example 26 was made from the woven fabric prepared in Example 9. As shown in Table 3, this toothed belt was excellent in performance due to effects of the inventive woven fabric for a toothed belt.

(Example 27)

A toothed belt in Example 27 was made from the woven fabric prepared in Example 10. As shown in Table 3, this toothed belt was excellent in performance due to effects of the inventive woven fabric for a toothed belt.

(Example 28)

A toothed belt in Example 28 was made from the woven fabric prepared in Example 11. As shown in Table 3, this toothed belt was excellent in performance due to effects of the inventive woven fabric for a toothed belt.

(Example 29)

A toothed belt in Example 29 was made from the woven fabric prepared in Example 12. As shown in Table 3, this toothed belt was excellent in performance due to effects of the inventive woven fabric for a toothed belt.

(Example 30)

A toothed belt in Example 30 was made from the woven fabric prepared in Example 13. As shown in Table 3, this toothed belt was excellent in performance due to effects of the inventive woven fabric for a toothed belt.

(Example 31)

A toothed belt in Example 31 was made from the woven fabric prepared in Example 14. As shown in Table 3, this toothed belt was excellent in performance due to effects of the inventive woven fabric for a toothed belt.

(Example 32)

A toothed belt in Example 32 was made from the woven fabric prepared in Example 15. As shown in Table 3, this toothed belt was excellent in performance due to effects of the inventive woven fabric for a toothed belt.

(Example 33)

A toothed belt in Example 33 was made from the woven fabric prepared in Example 16. As shown in Table 3, this toothed belt was excellent in performance due to effects of the inventive woven fabric for a toothed belt.

(Example 34)

A toothed belt,in Example 34 was made from the woven fabric prepared in Example 17. As shown in Table 3, this toothed belt was excellent in performance due to effects of the inventive woven fabric for a toothed belt.

Table 1. Structure of stretchable aligned and twisted yarn and stretching characteristics of woven fabric

| | Twist multiplier | A ratio of elastic fiber in stretchable aligned and twisted yarn (%) | Fiber fineness of elastic fiber in stretchable aligned and twisted yarn (dtex) | Stretching elongation of non-elastic fiber textured yarn (%) | Elongation at break of woven fabric (%) | Weave repeat | Maximum coefficient of stretch variation of woven fabric in the stretchable direction |
|---|---|---|---|---|---|---|---|
| Example 1 | 4403 | 3.0 | 14.7 | 19.1 | 153 | 2/2twill weave | 0.02 |
| Example 2 | 4403 | 3.0 | 14.7 | 19.1 | 140 | 2/2twill weave | 0.04 |
| Example 3 | 3740 | 4.2 | 14.7 | 51.0 | 114 | 2/2twill weave | 0.08 |
| Example 4 | 4190 | 5.9 | 26.0 | 10.4 | 102 | 2/2twill weave | 0.10 |
| Example 5 | 8806 | 3.0 | 14.7 | 19.1 | 127 | 2/2twill weave | 0.05 |
| Example 6 | 15411 | 3.0 | 14.7 | 19.1 | 60 | 2/2twill weave | 0.13 |
| Comparative example 1 | *17613 | 3.0 | 14.7 | 19.1 | * 45 | 2/2twill weave | *0.17 |
| Comparative example 2 | *881 | 3.0 | 14.7 | 19.1 | 148 | 2/2twill weave | *0.26 |
| Comparative example 3 | 4403 | 3.0 | 14.7 | *1.1 | 131 | 2/2twill weave | *0.18 |
| Comparative example 4 | 4403 | 3.0 | 14.7 | 19.1 | * 40 | * plain weave | *0.18 |
| Example 7 | 4919 | 12.6 | 33.9 | 19.1 | 190 | 2/2twill weave | 0.09 |
| Comparative example 5 | 4835 | *16.7 | *62.0 | 27.3 | *220 | 2/2twill weave | 0.11 |
| Example 8 | 2020 | 2.7 | 26.0 | 19.1 | 98 | 2/2twill weave | 0.08 |
| Example 9 | 7211 | 1.5 | 7.3 | 19.1 | 90 | 2/2twill weave | 0.08 |
| Example 10 | 4403 | 3.0 | 14.7 | 215.2 | 173 | 2/2twill weave | 0.02 |
| Example 11 | 4403 | 3.0 | 14.7 | 265.5 | 187 | 2/2twill weave | 0.03 |
| Example 12 | 4400 | 13.9 | 5.5 | 190.3 | 190 | 2/2twill weave | 0.12 |
| Example 13 | 4543 | 2.2 | 26.0 | 19.1 | 98 | 2/2twill weave | 0.12 |
| Example 14 | 4454 | 8.9 | 45.9 | 19.1 | 88 | 2/2twill weave | 0.12 |

(continued)

| | Twist multiplier | A ratio of elastic fiber in stretchable aligned and twisted yarn (%) | Fiber fineness of elastic fiber in stretchable aligned and twisted yarn (dtex) | Stretching elongation of non-elastic fiber textured yarn (%) | Elongation at break of woven fabric (%) | Weave repeat | Maximum coefficient of stretch variation of woven fabric in the stretchable direction |
|---|---|---|---|---|---|---|---|
| Example 15 | 4384 | 2.2 | 10.5 | 19.1 | 173 | 2/2twill weave | 0.13 |
| Example 16 | 4403 | 3.0 | 14.7 | 19.1 | 143 | 2/2twill weave | 0.11 |
| Example 17 | 4654 | 2.4 | 5.7 | 19.1 | 55 | 2/2twill weave | 0.14 |
| Note: * denotes that the value is out of the scope of the claim. | | | | | | | |

Table 2. Method for producing stretchable aligned and twisted yarn

| | Twist multiplier | Fiber fineness of elastic fiber prior to being stretched (dtex) | Yarn fineness of non-elastic fiber textured yarn (dtex) | Feeding tension of elastic fiber (cN/yarn) /stretching ratio | Device for stretching elastic fiber |
|---|---|---|---|---|---|
| Example 1 | 4403 | 44 | 235×2 | 7.94/3.0 | KTF |
| Example 2 | 4403 | 44 | 235×2 | 7.94/3.0 | KTF |
| Example 3 | 3740 | 44 | 335×1 | 7.94/3.0 | KTF |
| Example 4 | 4190 | 78 | 413×1 | 8.92/3.0 | KTF |
| Example 5 | 8806 | 44 | 235×2 | 7.94/3.0 | KTF |
| Example 6 | 15411 | 44 | 235×2 | 7.94/3.0 | KTF |
| Comparative example 1 | *17613 | 44 | 235×2 | 7.94/3.0 | KTF |
| Comparative example 2 | *881 | 44 | 235×2 | 7.94/3.0 | KTF |
| Comparative example 3 | 4403 | 44 | 235(raw yarn)×2 | 7.94/3.0 | KTF |
| Comparative example 4 | 4403 | 44 | 235×2 | 7.94/3.0 | KTF |
| Example 7 | 4919 | 78 | 235×1 | 7.91/2.3 | KTF |
| Comparative example 5 | 4835 | *155 | 156×2 | 13.07/2.5 | KTF |
| Example 8 | 2020 | 78 | 235×4 | 8.92/3.0 | KTF |
| Example 9 | 7211 | 22 | 235×2 | 4.02/3.0 | KTF |
| Example 10 | 4403 | 44 | 235×2 | 7.94/3.0 | KTF |
| Example 11 | 4403 | 44 | 235×2 | 7.94/3.0 | KTF |
| Example 12 | 4400 | 22 | 34×1 | 5.65/4.0 | KTF |
| Example 13 | 4159 | 78 | 235×5 | 8.92/3.0 | KTF |

(continued)

|  | Twist multiplier | Fiber fineness of elastic fiber prior to being stretched (dtex) | Yarn fineness of non-elastic fiber textured yarn (dtex) | Feeding tension of elastic fiber (cN/yarn) /stretching ratio | Device for stretching elastic fiber |
|---|---|---|---|---|---|
| Example 14 | 4543 | 78 | 235×2 | 6.82/1.7 | KTF |
| Example 15 | 4384 | 44 | 235×2 | 12.71/4.2 | KTF |
| Example 16 | 4403 | 44 | 235×2 | Δ0.07/3.0 | 2 rolls |
| Example 17 | 4654 | 17 | 235×1 | 3.22/3.0 | KTF |
| Note: * denotes that the value is out of the scope of the claim. Δ denotes that the value is a variation range of tension of elastic fiber. | | | | | |

Table 3. Characteristics of toothed belt and estimation results

|  | Coefficient of PLD variation | Peeling strength (N/2.54 cm) | Noise elimination ability dB (A) | | Durability (Hr) | Clearness and neatness of twill lines in woven fabric | Total estimation |
|---|---|---|---|---|---|---|---|
|  |  |  | 3000rpm | 6000rpm |  |  |  |
| Example 18 | 0.02 | 170.2 | 8.8 | 103 | 220 | W0.4 | A |
| Example 19 | 0.03 | 168.8 | 88 | 103 | 220 | W0.4 | A |
| Example 20 | 0.07 | 155.6 | 89 | 104 | 300 | W0.8 | A |
| Example 21 | 0.09 | 150.1 | 89 | 104 | 310 | W0.8 | A |
| Example 22 | 0.04 | 150.7 | * 92 | * 106 | * 180 | WO.8 | B |
| Example 23 | * 0.13 | * 125.8 | * 94 | * 109 | * 160 | * W1.2 | B |
| Comparative example 6 | **0.18 | * 115.1 | ** 97 | **113 | **140 | * W1.4 | C |
| Comparative example 7 | **0.25 | * 140.4 | **100 | **115 | **110 | **W3.4 | C |
| Comparative example 8 | **0.19 | * 143.3 | **102 | **117 | ** 90 | **W3.8 | C |
| Comparative example 9 | **0.19 | * 121.9 | ** 98 | **113 | **120 | **W2.8 | C |
| Example 24 | 0.09 | * 130.6 | * 92 | * 107 | 210 | W0.8 | B |
| Comparative example 10 | * 0.12 | ** * 95.0 | **100 | **114 | **100 | **W3.6 | C |
| Example 25 | 0.08 | 155.5 | 89 | 104 | * 170 | W0:8 | B |
| Example 26 | 0.08 | 150.9 | 89 | 104 | * 190 | W0.8 | B |
| Example 27 | 0.02 | 166.6 | 89 | 104 | * 190 | W0.4 | B |
| Example 28 | 0.03 | 164.0 | * 92 | * 108 | * 170 | W0.6 | B |
| Example 29 | * 0.12 | * 128.1 | * 94 | * 110 | * 160 | * W1.0 | B |
| Example 30 | * 0.12 | * 138.8 | * 93 | 108 | * 170 | * W1.8 | B |
| Example 31 | * 0.13 | * 121.7 | * 93 | 108 | * 160 | * W1.6 | B |
| Example 32 | * 0.14 | 165.1 | * 93 | 108 | * 160 | * W1.4 | B |

(continued)

| | Coefficient of PLD variation | Peeling strength (N/2.54 cm) | Noise elimination ability dB (A) | | Durability (Hr) | Clearness and neatness of twill lines in woven fabric | Total estimation |
|---|---|---|---|---|---|---|---|
| | | | 3000rpm | 6000rpm | | | |
| Example 33 | * 0.14. | * 143.2 | * 94 | * 110 | * 170 | * W1.8 | B |
| Example 34 | * 0.14 | * 128.8 | * 94 | * 109 | * 160 | * W1.8 | B |
| Note: * denotes rank B; ** denotes rank C | | | | | | | |

CAPABILITY OF EXPLOITATION IN INDUSTRY

The inventive woven fabric for a toothed belt in which a stretchable aligned and twisted yarn composed of an elastic fiber and a non-elastic fiber textured yarn is used in warp and/or weft groups is expected to eliminate noise and mitigate shock due to a proper cushioning effect as well as to improve a durability. By using the non-elastic fiber textured yarn, the stretchable aligned and twisted yarn is uniformly stretchable even if the elastic fiber shrinks, whereby the maximum coefficient stretch elongation becomes small in the stretchable direction of the woven fabric. Accordingly, the woven fabric is uniformly stretched, and the vulcanizing process can be carried out along the teeth portion of the belt while maintaining a constant thickness. As a result, the twill lines of the woven fabric are clearly visible and neatly arranged on the surface thereof.

Thereby, the frictional resistance of the belt to the pulley becomes low to facilitate the frictional noise elimination effect, and the residual air is decreased to suppress the air stream sound, resulting in the further improvement of the durability and the noise-elimination effect. Since the non-elastic fiber, textured yarn can be prepared by the false-twisting condition selected to not weaken the raw yarn, a high strength is maintained in the resultant woven fabric to further facilitate the durability. Accordingly, the toothed belt obtained from this woven fabric has a uniform teeth surface and realizes the low noise and the high durability. Also, the belt width can be reduced to result in the space-saving effect. The inventive technique is applicable to various fields.

**Claims**

1. A woven fabric for a toothed belt prepared by using stretchable aligned and twisted yarns as warp yarns and/or weft yarns, in which an elastic fiber and a non-elastic fiber textured yarn, to which crimps are imparted by a false-twisting process or a stuffer box process, are twisted or mixed together, wherein the following items (a) and (b) are satisfied:

   (a) a twist multiplier of the stretchable aligned and twisted yarn is in a range from 1000 to 16000, and
   (b) an elongation at breakof the woven fabric in the stretchable direction thereof is in a range from 50 to 200%.

2. A woven fabric for a toothed belt as defined by claim 1, wherein the maximum coefficient of stretch variation of the woven fabric cut into a piece having a width of 5 cm is in a range from 0 to 0.15 in the stretchable direction of the fabric at loads of 9.8 N, 19.6 N and 29.4 N.

3. A woven fabric for a toothed belt as defined by claim 1 or 2, wherein a ratio of the elastic fiber in the stretchable aligned and twisted yarn is 15% by weight or less.

4. A woven fabric for a toothed belt as defined by any one of claims 1 to 3, wherein a fiber fineness of the elastic fiber in the stretchable aligned and twisted yarn is 50 dtex or less.

5. A woven fabric for a toothed belt as defined by any one of claims 1 to 4, wherein the stretching elongation of the non-elastic fiber textured yarn is in range from 2 to 250%.

6. A woven fabric for a toothed belt as defined by any one of claims 1 to 5, wherein two or more continuous floating yarns or dead yarns of the stretchable aligned and twisted yarn are contained in a weave repeat as warp yarns and/or weft yarns.

**7.** A woven fabric for a toothed belt as defined by any one of claims 1 to 6, wherein a twist multiplier of the stretchable aligned and twisted yarn is in a range from 3000 to 8000 and an elongation at break is in a range from 80 to 200%.

**8.** A woven fabric for a toothed belt as defined by any one of claims 1 to 7, wherein the stretchable aligned and twisted yarn contains elastic fibers in a range from 0.5 to 5% by weight, and the elongation at break is in a range from 80 to 200%.

**9.** A method for producing a woven fabric for a toothed belt, comprising the steps of: preparing a stretchable aligned and twisted yarn by aligning and twisting a stretched elastic fiber with a non-elastic fiber textured yarn, to which crimps are imported by a false-twisting process or a stuffer box process, at a twist multiplier in a range from 1000 to 16000, weaving a fabric from the resultant stretchable aligned and twisted yarns used as warp yarns and/or weft yarns, and milling the woven fabric thus obtained to have the stretching elongation of 80% or more.

**10.** A method for producing a woven fabric for a toothed belt as defined by claim 9, wherein the elastic fiber having a fiber fineness in a range from 20 to 150 dtex is stretched, aligned and twisted.

**11.** A method for producing a woven fabric for a toothed belt as defined by claim 9 or 10, wherein the elastic fiber is stretched at a stretching ratio in a range from 2 to 4, aligned and twisted.

**12.** A method for producing a woven fabric for a toothed belt as defined by any one of claims 9 to 11, wherein the aligning and twisting process of the elastic fiber is carried out while controlling the variable range of the stretching tension in a range from 0 to 0.1 cN/dtex.

**13.** A method for producing a woven fabric for a toothed belt as defined by any one of claims 9 to 12, wherein the aligning and twisting process of the elastic fiber is carried out while using a device for controlling the tension variance during the stretching process thereof.

**14.** A method for producing a woven fabric for a toothed belt as defined by any one of claims 9 to 13, wherein the aligning and twisting process is carried out by using non-elastic fiber textured yarns having a fiber fineness in a range from 40 to 1000 dtex.

**15.** A method for producing a woven fabric for a toothed belt as defined by any one of claims 9 to 14, wherein the milling process is carried out by a continuous open width scouring machine or a jet scouring machine

**16.** A toothed belt comprising a belt body made of elastic resin having a tensile member therein and a toothed surface on one side thereof made of elastic resin and covered with a substrate fabric, wherein the substrate fabric is a woven fabric defined by any one of claims 1 to 8.

**17.** A toothed belt as defined by claim 16, wherein a coefficient of PLD variation is in a range from 0 to 0.15.

**18.** A toothed belt as defined by any one of claims 16 and 17, wherein the peeling strength of the substrate fabric is in a range from 100 to 200 N/2.54 cm.

**Patentansprüche**

**1.** Gewebe für einen Zahnriemen, hergestellt unter Verwendung von dehnbaren ausgerichteten und gezwirnten Garnen als Kettgarne und/oder Schussgarne, wobei eine elastische Faser und ein texturiertes Garn aus einer unelastischen Faser, das durch ein Falschdrahtverfahren oder ein Stauchkammerverfahren gekräuselt wird, miteinander verzwirnt oder vermischt werden, wobei die folgenden Bedingungen (a) und (b) erfüllt sind:

(a) der Zwirnkoeffizient des dehnbaren ausgerichteten und gezwirnten Garns liegt in einem Bereich von 1000 bis 16 000; und
(b) die Reißdehnung des Gewebes in seiner dehnbaren Richtung liegt in einem Bereich von 50 bis 200%.

**2.** Gewebe für einen Zahnriemen gemäß Anspruch 1, wobei der maximale Dehnungsvariationskoeffizient des zu einem Stück mit einer Breite von 5 cm geschnittenen Gewebes bei Belastungen von 9,8 N, 19,6 N und 29,4 N in einem Bereich von 0 bis 0,15 in der dehnbaren Richtung des Gewebes liegt.

3. Gewebe für einen Zahnriemen gemäß Anspruch 1 oder 2, wobei der Anteil der elastischen Faser in dem dehnbaren ausgerichteten und gezwirnten Garn 15 Gew.-% oder weniger beträgt.

4. Gewebe für einen Zahnriemen gemäß einem der Ansprüche 1 bis 3, wobei die Faserfeinheit der elastischen Faser in dem dehnbaren ausgerichteten und gezwirnten Garn 50 dtex oder weniger beträgt.

5. Gewebe für einen Zahnriemen gemäß einem der Ansprüche 1 bis 4, wobei die Dehnung des texturierten Garns aus der unelastischen Faser im Bereich von 2 bis 250% liegt.

6. Gewebe für einen Zahnriemen gemäß einem der Ansprüche 1 bis 5, wobei zwei oder mehr endlose schwimmende Garne oder blinde Garne des dehnbaren ausgerichteten und gezwirnten Garns in einem Bindungsrapport als Kettgarne und/oder Schussgarne enthalten sind.

7. Gewebe für einen Zahnriemen gemäß einem der Ansprüche 1 bis 6, wobei der Zwirnkoeffizient des dehnbaren ausgerichteten und gezwirnten Garns in einem Bereich von 3000 bis 8000 liegt und die Reißdehnung in einem Bereich von 80 bis 200% liegt.

8. Gewebe für einen Zahnriemen gemäß einem der Ansprüche 1 bis 7, wobei das dehnbare ausgerichtete und gezwirnte Garn elastische Fasern in einem Bereich von 0,5 bis 5 Gew.-% enthält und die Reißdehnung in einem Bereich von 80 bis 200% liegt.

9. Verfahren zur Herstellung eines Gewebes für einen Zahnriemen, das die folgenden Schritte umfasst: Herstellen eines dehnbaren ausgerichteten und gezwirnten Garns durch Ausrichten und Zwirnen einer gedehnten elastischen Faser mit einem texturierten Garn aus einer unelastischen Faser, das durch ein Falschdrahtverfahren oder ein Stauchkammerverfahren gekräuselt wird, bei einem Zwirnkoeffizienten in einem Bereich von 1000 bis 16 000, Weben eines Gewebes aus den resultierenden dehnbaren ausgerichteten und gezwirnten Garnen, die als Kettgarne und/oder Schussgarne verwendet werden, und Walken des so erhaltenen Gewebes, so dass man eine Dehnung von 80% oder mehr erhält.

10. Verfahren zur Herstellung eines Gewebes für einen Zahnriemen gemäß Anspruch 9, wobei die elastische Faser mit einer Faserfeinheit im Bereich von 20 bis 150 dtex gedehnt, ausgerichtet und gezwirnt wird.

11. Verfahren zur Herstellung eines Gewebes für einen Zahnriemen gemäß Anspruch 9 oder 10, wobei die elastische Faser in einem Dehnungsverhältnis in einem Bereich von 2 bis 4 gedehnt, ausgerichtet und gezwirnt wird.

12. Verfahren zur Herstellung eines Gewebes für einen Zahnriemen gemäß einem der Ansprüche 9 bis 11, wobei der Vorgang des Ausrichtens und Zwirnens der elastischen Faser durchgeführt wird, während der Variablenbereich der Dehnungsspannung in einem Bereich von 0 bis 0,1 cN/dtex gesteuert wird.

13. Verfahren zur Herstellung eines Gewebes für einen Zahnriemen gemäß einem der Ansprüche 9 bis 12, wobei der Vorgang des Ausrichtens und Zwirnens der elastischen Faser durchgeführt wird, während eine Vorrichtung zum Steuern der Spannungsvarianz während des Dehnungsvorgangs verwendet wird.

14. Verfahren zur Herstellung eines Gewebes für einen Zahnriemen gemäß einem der Ansprüche 9 bis 13, wobei der Vorgang des Ausrichtens und Zwirnens durchgeführt wird, indem man texturierte Garne aus einer unelastischen Faser mit einer Faserfeinheit in einem Bereich von 40 bis 1000 dtex verwendet.

15. Verfahren zur Herstellung eines Gewebes für einen Zahnriemen gemäß einem der Ansprüche 9 bis 14, wobei der Vorgang des Walkens durch eine Kontinue-Breitwaschmaschine oder eine Düsenwaschmaschine durchgeführt wird.

16. Zahnriemen, der einen Riemenkörper aus elastischem Harz, das ein Zugelement enthält, und eine gezahnte Oberfläche auf einer Seite desselben, die aus elastischem Harz besteht und mit einem Substrattextil bedeckt ist, umfasst, wobei das Substrattextil ein Gewebe gemäß einem der Ansprüche 1 bis 8 ist.

17. Zahnriemen gemäß Anspruch 16, wobei der PLD-Variationskoeffizient in einem Bereich von 0 bis 0,15 liegt.

18. Zahnriemen gemäß einem der Ansprüche 16 und 17, wobei die Schälfestigkeit des Substrattextils in einem Bereich von 100 bis 200 N/2,54 cm liegt.

**EP 1 388 598 B1**

**Revendications**

1. Tissu tissé pour une courroie dentée, préparé en utilisant des fils alignés et retordus étirables comme fils de chaîne et/ou fils de trame, dans lequel une fibre élastique et un fil texturé à fibre inélastique auquel une frisure a été appliquée par un procédé de fausse torsion ou par un procédé à boîte de bourrage, sont retordus ou mélangés les uns avec les autres, dans lequel les conditions (a) et (b) suivantes sont satisfaites:

   (a) le coefficient de torsion du fil aligné et retordu étirable est compris dans une gamme allant de 1000 à 16 000; et
   (b) l'élongation à la rupture du tissu tissé dans sa direction extensible est comprise dans une gamme allant de 50 à 200 pour cent.

2. Tissu tissé pour une courroie dentée selon la revendication 1, dans lequel le coefficient maximal de variation d'allongement du tissu tissé découpé en une pièce ayant une largeur de 5 cm est compris dans une gamme allant de 0 à 0,15 dans la direction extensible du tissu avec des charges de 9,8 N, 19,6 N et 29,4 N.

3. Tissu tissé pour une courroie dentée selon la revendication 1 ou 2, dans lequel la quantité de la fibre élastique dans le fil aligné et retordu étirable est de 15 pour cent en poids ou moins.

4. Tissu tissé pour une courroie dentée selon l'une quelconque des revendications 1 à 3, dans lequel le titrage de la fibre élastique dans le fil aligné et retordu étirable est de 50 dtex ou moins.

5. Tissu tissé pour une courroie dentée selon l'une quelconque des revendications 1 à 4, dans lequel le pourcentage d'élongation du fil texturé à fibre inélastique est compris dans une gamme allant de 2 à 250%.

6. Tissu tissé pour une courroie dentée selon l'une quelconque des revendications 1 à 5, dans lequel deux ou plusieurs fils flottants ou fils discontinus contigus du fil aligné et retordu étirable sont contenus dans un rapport de tissage comme fils de chaîne et/ou fils de trame.

7. Tissu tissé pour une courroie dentée selon l'une quelconque des revendications 1 à 6, dans lequel le coefficient de torsion du fil aligné et retordu étirable est comprise dans une gamme allant de 3000 à 8000 et l'élongation à la rupture est comprise dans une gamme allant de 80 à 200 pour cent.

8. Tissu tissé pour une courroie dentée selon l'une quelconque des revendications 1 à 7, dans lequel le fil aligné et retordu étirable contient des fibres élastiques dans une quantité de 0,5 à 5 pour cent en poids et l'élongation à la rupture est comprise dans une gamme allant de 80 à 200 pour cent.

9. Procédé pour produire un tissu tissé pour une courroie dentée, comprenant les étapes consistant à préparer un fil aligné et retordu étirable par alignement et retordage d'une fibre élastique étirée avec un fil texturé à fibre inélastique auquel une frisure a été appliquée par un procédé de fausse torsion ou par un procédé à boîte de bourrage, à un coefficient de torsion compris dans la gamme allant de 1000 à 16 000, tisser un tissu à partir des fils alignés et retordus étirables obtenus qui sont utilisés comme fils de chaîne et/ou fils de trame, et fouler le tissu tissé ainsi obtenu pour réaliser un pourcentage d'élongation de 80 pour cent ou plus.

10. Procédé pour produire un tissu tissé pour une courroie dentée selon la revendication 9, dans lequel une fibre élastique ayant un titrage compris dans une gamme allant de 20 à 150 dtex est étirée, alignée et retordue.

11. Procédé pour produire un tissu tissé pour une courroie dentée selon la revendication 9 ou 10, dans lequel la fibre élastique est étirée avec un rapport d'étirage compris dans une gamme allant de 2 à 4, alignée et retordue.

12. Procédé pour produire un tissu tissé pour une courroie dentée selon l'une quelconque des revendications 9 à 11, dans lequel le procédé d'alignement et de retordage de la fibre élastique est exécuté en commandant la plage variable de la tension d'étirage dans une gamme allant de 0 à 0,1 cN/dtex.

13. Procédé pour produire un tissu tissé pour une courroie dentée selon l'une quelconque des revendications 9 à 12, dans lequel le procédé d'alignement et de retordage de la fibre élastique est exécuté en utilisant un dispositif pour commander la variance de la tension pendant le processus d'étirage de celle-ci.

14. Procédé pour produire un tissu tissé pour une courroie dentée selon l'une quelconque des revendications 9 à 13, dans lequel le procédé d'alignement et de retordage est exécuté en utilisant des fils texturés à fibre inélastique ayant un titrage compris dans une gamme allant de 40 à 1000 dtex.

15. Procédé pour produire un tissu tissé pour une courroie dentée selon l'une quelconque des revendications 9 à 14, dans lequel le procédé de foulage est exécuté par un appareil de désensimage de largeur ouverte à alimentation continue ou par un appareil de désensimage à jet.

16. Courroie dentée comprenant un corps de courroie consistant en une résine élastique contenant un élément de traction et portant une surface dentée sur un de ses côtés consistant en une résine élastique, couverte d'un tissu de substrat, dans laquelle le tissu de substrat est un tissu tissé selon l'une quelconque des revendications 1 à 8.

17. Courroie dentée selon la revendication 16, dans laquelle le coefficient de la variation de la valeur PLD est compris dans une gamme allant de 0 à 0,15.

18. Courroie dentée selon l'une quelconque des revendications 16 et 17, dans laquelle la force de pelage du tissu de substrat est comprise dans une gamme allant de 100 à 200 N/2,54 cm.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8312724 A
- JP 63015628 A
- JP 59009239 A